## Europäisches Patentamt

## European Patent Office

## Office européen des brevets

(19)

(11) Veröffentlichungsnummer: **0 154 715**
**B1**

(12) **EUROPÄISCHE PATENTSCHRIFT**

(45) Veröffentlichungstag der Patentschrift:
07.12.88

(51) Int. Cl.⁴: **B 60 C 25/06**

(21) Anmeldenummer: 84115991.6

(22) Anmeldetag: 20.12.84

| E R R A T U M |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT :<br>SHOULD READ :<br>DEVRAIT ETRE LU : |
|---|---|---|---|---|
| des Felgenkerns (17) | 3 | 4 | 22 | des Felgenhornes (17) |
| of the rim core portion (17). | 4 | 5 | 11 | of the rim flange (17). |
| du noyau de jante (17). | 4 | 6 | 23 | du collet de jante (17). |

Tag der Entscheidung
über die Berichtigung )
Date of decision on ) ...16.12.88...........
rectification: )
Date de décision portant )
sur modification: )

Ausgabe- und Ver- )
öffentlichungstag: )
Issue and publication ) ...22.02.89.........
date: )
Date d'edition et de )
publication: )

Patbl.Nr)

EPB no:) ..89./.08.

Bull. no:)

(19) **Europäisches Patentamt**

**European Patent Office**    (11) Veröffentlichungsnummer: **0 154 715**
**B1**
**Office européen des brevets**

(12)    # EUROPÄISCHE PATENTSCHRIFT

(45) Veröffentlichungstag der Patentschrift:    (51) Int. Cl.⁴: **B 60 C 25/06**
**07.12.88**

(21) Anmeldenummer: **84115991.6**

(22) Anmeldetag: **20.12.84**

(54) **Montagevorrichtung für Reifen.**

(30) Priorität: **18.01.84 DE 3401476**    (73) Patentinhaber: **Gebr. Hofmann GmbH & Co. KG, Postfach 4150, D-6100 Darmstadt (DE)**

(43) Veröffentlichungstag der Anmeldung: **18.09.85 Patentblatt 85/38**    (72) Erfinder: **Goebel, Eickhart, Elbestrasse 11, D-6102 Pfungstadt (DE)**

(45) Bekanntmachung des Hinweises auf die Patenterteilung: **07.12.88 Patentblatt 88/49**    (74) Vertreter: **Nöth, Heinz, Dipl.-Phys., Patentanwälte Pfenning, Meinig & Partner Mozartstrasse 17, D-8000 München 2 (DE)**

(84) Benannte Vertragsstaaten:
**FR GB IT NL SE**

(56) Entgegenhaltungen:
**EP-A- 0 042 363**
**EP-A- 0 141 164**
**DE-A- 2 715 195**
**DE-A- 2 744 821**

## Beschreibung

Die Erfindung betrifft eine Montagevorrichtung für Reifen gemäß dem Oberbegriff des Anspruchs 1.

Eine derartige Montagevorrichtung, welche in der prioritätsälteren, nicht vorveröffentlichten EP-A-0 141 164 beschrieben ist, ist zur Montage von Reifen geeignet, die durch mehrere Veröffentlichungen, u. a. auch in der Zeitschrift «Gummibereifung», 60. Jahrgang, Januar 1984, Seite 62 bis 65, bekannt geworden sind. Es handelt sich um eine Reifen-Felgen-Kombination, bei der der Reifensitz auf der radial innenliegenden Seite des Felgenkranzes ist. Der Reifen greift also um die Felge von außen herum und findet seinen Halt hinter den radial nach innen geneigten Felgenhörnern.

Aufgrund der völlig neuartigen Konzeption von Reifen und Felge sind die herkömmlichen Reifenmontiereinrichtungen nicht geeignet, den Reifen auf die Felge aufzuziehen.

Aufgabe der Erfindung ist es daher, eine Montagevorrichtung zu schaffen, die geeignet ist, einen vorstehend erwähnten Reifen schnell und problemlos auf eine Felge aufzuziehen, so daß er um die Felge von außen herum ohne Beulen am Reifenwulstumfang hinter den radial nach innen geneigten Felgenhörnern seinen Sitz auf der Felge findet.

Diese Aufgabe wird bei der eingangs genannten Montiervorrichtung erfindungsgemäß durch die im kennzeichnenden Teil des Anspruches 1 enthaltenen Maßnahmen gelöst.

In den Unteransprüchen sind vorteilhafte Weiterbildungen der Erfindung angegeben.

Durch das angetriebene Montierwerkzeug wird der Reifenwulst über das Felgenhorn in das Tiefbett der Felge gerollt, wobei eine Bremseinrichtung, die an der Felgenaufnahme angreift, für die zum Aufziehen erforderliche Drehmomentdifferenz zwischen Montierwerkzeug und Reifen sorgt. Damit der Reifen auf der Felge beim Aufziehvorgang nicht weiterrutscht, wird der Reifenwulst an mindestens einer Stelle an der Felge festgeklemmt.

Die Erfindung wird nun anhand eines Ausführungsbeispiels näher erläutert.

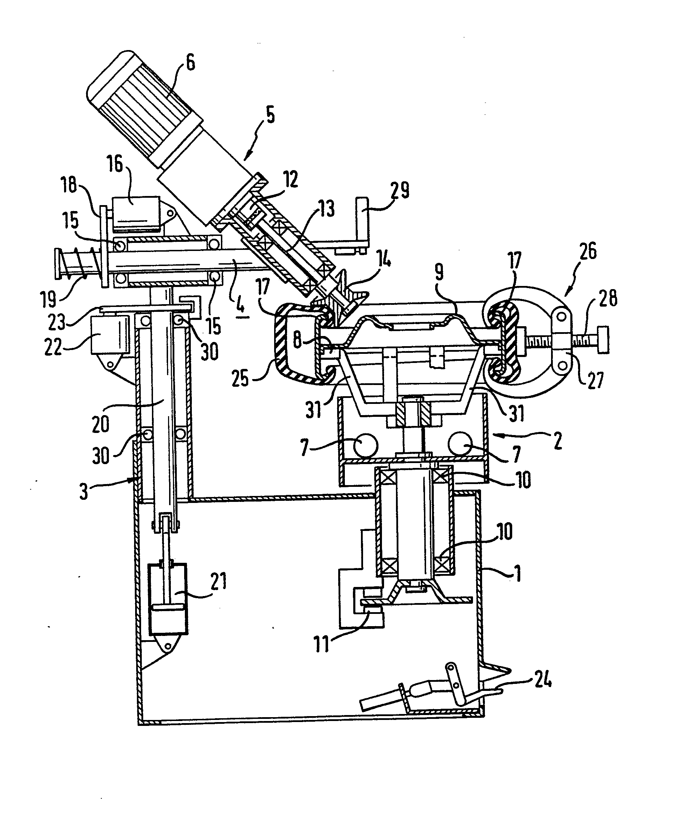

Die Figur zeigt schematisch die Montagevorrichtung im Schnitt.

Die Vorrichtung weist ein Grundgestell auf, auf dem eine Felgenaufnahme 2 vorgesehen ist. An dem Grundgestell 1 ist seitlich eine Säulenführung 3 mit einem horizontal beweglichen Montagearm 4 angeordnet. Der Montagearm 4 trägt eine Montageeinheit 5.

Die Felgenaufnahme 2 besteht vorzugsweise aus drei bzw. vier Spannarmen 6, die mittels Zylindereinheiten 7 in bekannter Weise radial bewegt werden können. Die Spannarme 6 weisen an ihren äußeren Enden Spannelemente 8 auf, mit denen die Felge 9 aufgenommen wird. Die Felge 9 kann jedoch auch mittels einer an sich bekannten und nicht näher dargestellten zentralen Spanneinheit gespannt werden, die am Mittelloch der Felge 8 angreift.

Die Felgenaufnahme 2 ist ferner mittels der Kugellager 10 drehbar gelagert und weist am unteren Ende eine Bremseinrichtung 11 auf, die vorzugsweise als Scheibenbremse ausgeführt ist. Die Bremseinrichtung kann aber auch als Gleitlagerlagerung mit konstruktiv vorgegebenem Reibwert ausgeführt sein.

Die Montageeinheit 5 besteht aus einer Antriebseinheit 6, vorzugsweise einem Elektromotor mit vorgeschaltetem Getriebe, einer Wellenkupplung 12, einer Antriebswelle 13 und dem Montierwerkzeug 14.

Das Montierwerkzeug 14 kann als konische Rolle oder, wie in dem Ausführungsbeispiel gezeigt, als doppelseitige konische Rolle ausgeführt sein.

Die Montageeinheit 5 ist auf einem Montagearm 4 gelagert und kann manuell oder mittels einer Antriebseinheit horizontal verschoben werden. Der Montagearm 4 ist hierzu auf Führungsrollen 15 gelagert.

Über einen horizontal wirkenden Andrückzylinder 16 in Verbindung mit einer Klemmplatte 18 wird das Montierwerkzeug 14 in Richtung des Felgenhornes 17 gedrückt. Eine Druckfeder 19 schiebt die Klemmplatte 18 nach dem Entlüften des Andrückzylinders 16 wieder in die Ausgangsposition, wodurch der Montagearm 4 mit der Montageeinheit 5 frei verschiebbar ist.

In der Säulenführung 3 ist eine Säule 20 in Führungsrollen 30 vertikal geführt und wird mittels eines Senkzylinders 21 bewegt. Der Senkzylinder 21 wird mit einem konstanten Druck beaufschlagt, der so geregelt wird, daß das Gewicht der gesamten Montiereinheit kompensiert wird und damit eine einfache und leichte Anpassung der Montageeinheit 5 an die unterschiedlichen Radbreiten möglich ist. Mittels eines weiteren Klemmzylinders 22 wird die Säule 20 in Verbindung mit einer Klemmplatte 23 arretiert. Zur Rückstellung in die Ausgangsposition der Klemmplatte 23 kann ebenfalls eine nicht dargestellte Rückstellfeder vorgesehen sein.

Die Zylinder 7, 16, 22, 21 können in bekannter Weise durch Betätigen entsprechender Pedale 24 und/oder Drehgriffe 29 angesteuert werden.

Nach dem Einführen der Felge 9 in den Reifen 25 wird eine oder werden beide Reifenflanken eingestülpt und in die Reifenwulste 17 mindestens an einer Stelle des Umfanges vorzugsweise in das Tiefbett der Felge 9 eingeführt. In dieser Position werden die Reifenwulste 17 mittels einer Klemmeinrichtung 26 an der Felge 9 fixiert. Die Klemmeinrichtung 26 kann als Bügel 27 ausgeführt sein und den oberen und unteren Reifenwulst 17 im Tiefbett der Felge 9 fixieren, wobei der Bügel 27 sich über eine Stellschraube 28 gegenüber dem Reifen 25 abstützt. Die Klemmeinrichtung 26 kann jedoch auch so ausgeführt sein, daß diese sich im Mittelloch der Felge 9 abstützt und mittels eines nicht dargestellten, radial beweglichen Arms den Reifenwulst 17 in das Tiefbett der Felge 9 drückt.

Nach dem Aufspannen der Felge 9 auf die Felgenaufnahme 2 wird die Felgenaufnahme 2 so eingedreht, daß die Klemmeinrichtung 26 neben der Montageeinheit 5 angeordnet ist. Nachfolgend wird das Montierwerkzeug 14 in vertikaler und horizontaler Richtung so eingestellt, daß dieses den Reifenwulst über das Felgenhorn 17 drückt.

Nach dem Einstellen des Montierwerkzeuges 14 werden der Andrückzylinder 16 sowie der Klemmzylinder 22 betätigt, so daß das Montierwerkzeug durch die Klemmplatten 18 und 23 noch stärker gegen das Felgenhorn 17 vorgespannt wird. Durch diese Vorspannung können exzentrische und Planlauffehler der Felge 9 sowie eine eventuelle außermittige Aufspannung der Felge 9 auf der Felgenaufnahme 2 ausgeglichen werden.

Anschliessend wird das Montierwerkzeug 14 mittels der Antriebseinheit 6 angetrieben, so daß die aufgespannte Felge 9 zusammen mit dem aufgelegten Reifen 25 unter dem sich drehenden Montierwerkzeug 14 hindurchbewegt wird.

Der Reifenwulst wird hierdurch über das Felgenhorn 17 in das Tiefbett der Felge 9 gerollt. Um den Reifenwulst, nachdem er über das Felgenhorn 17 gerollt ist, radial nach außen in das Tiefbett der Felge 9 zu drücken, ist eine Drehmomentdifferenz zwischen dem angetriebenen Montagewerkzeug 14 und der sich drehenden Einheit Reifen und Felge notwendig. Diese Differenz wird durch eine Bremseinrichtung 11 erzeugt, die vorzugsweise am unteren Ende der Felgenaufnahme 2 angeordnet ist und insbesondere als Scheibenbremse ausgebildet ist. Die Bremskraft wird so stark eingestellt, daß ein beschädigungsfreies Einrollen erfolgen kann.

Zum besseren und einfacheren Einrollen ist die Montageeinheit 5 außer der Schrägstellung zur Achse der Felgenaufnahme 2 auch noch in Richtung der Einrollbewegung geneigt, so daß der Reifenwulst noch stärker in das Tiefbett der Felge 9 geschoben wird und sich am Ende des Aufziehvorganges keine Beulen am Reifenwulstumfang bilden, die das Einrollen unter Umständen sehr erschweren bzw. unmöglich machen würden.

Nach dem Aufziehen des oberen Reifenwulstes auf die Felge 9 wird die Felge 9 entspannt, das Rad gedreht und nach dem erneuten Festspannen der Felge 9 der andere Reifenwulst in der zuvor beschriebenen Weise aufgezogen.

Zur Beschleunigung des Aufziehvorganges können auch zwei Montageeinheiten 5 zur Anwendung kommen, die gleichzeitig den oberen und unteren Reifenwulst aufziehen. Hierzu werden die Montagewerkzeuge 14 jedoch gegensinnig angetrieben.

Bei der Anwendung von zwei Montageeinheiten 5 kann die Radaufnahme 2 auch aus konstruktiven Gründen horizontal angeordnet sein.

Nach dem Aufziehvorgang wird das Rad in bekannter Weise mit Luft gefüllt.

## Patentansprüche

1. Montagevorrichtung zum Montieren eines Fahrzeugluftreifens auf eine Radfelge (9) mit einer drehbaren Felgenaufnahme (2), auf der die Radfelge (9) befestigt wird, einem Montierwerkzeug in Form einer an einen Reifenwulst angedrückten Montierrolle (14), deren Rollenachse schräg zur Achse der Felgenaufnahme (2) liegt, einem Drehantrieb (6) für den Antrieb der Montierrolle (14) zum Montieren des Fahrzeugluftreifens (25) bei sich drehender Radfelge (9) und sich mitdrehendem, zumindest an einer Stelle an der Radfelge (9) festgeklemmtem Fahrzeugluftreifen, und einer der Felgenaufnahme (2) zugeordneten Bremseinrichtung (11), dadurch gekennzeichnet, daß die Achse der Montierrolle (14) zum verstärkten Einschieben des Reifenwulstes in das Tiefbett der Felge (9) in Richtung der Einrollbewegung geneigt ist.

2. Montagevorrichtung nach Anspruch 1, dadurch gekennzeichnet, daß der Reifenwulst im Tiefbett der Felge (9) festgeklemmt ist.

3. Montagevorrichtung nach Anspruch 2, dadurch gekennzeichnet, daß der obere und der untere Reifenwulst des Reifens (25) im Tiefbett der Felge (9) festgeklemmt sind.

4. Montagevorrichtung nach Anspruch 1, dadurch gekennzeichnet, daß die Montierrolle (14) als konische Rolle ausgeführt ist.

5. Montagevorrichtung nach Anspruch 1, dadurch gekennzeichnet, daß die Bremseinrichtung (11) am unteren Ende der drehbaren Felgenaufnahme (2) angeordnet ist.

6. Montagevorrichtung nach Anspruch 1 oder 4, dadurch gekennzeichnet, daß die Montierrolle (14) mit in etwa konstantem Druck horizontal in Richtung des Felgenkerns (17) gedrückt ist.

7. Montagevorrichtung nach Anspruch 1, dadurch gekennzeichnet, daß eine den Drehantrieb (6) und Montierrolle (14) aufweisende Montageeinheit (5) vertikal verfahrbar ist.

8. Montagevorrichtung nach einem der Ansprüche 1 bis 7, dadurch gekennzeichnet, daß das Gewicht der verschiebbaren Montageeinheit (5) durch eine mit einem konstanten Druck beaufschlagte Zylindereinheit (21) kompensiert ist.

9. Montagevorrichtung nach Anspruch 1 oder 2, dadurch gekennzeichnet, daß zum Festklemmen des Reifenwulstes dieser radial nach außen in das Tiefbett der Felge (9) gedrückt ist.

10. Montagevorrichtung nach einem der Ansprüche 1 bis 9, dadurch gekennzeichnet, daß die Montageeinheit (5) in horizontaler Richtung arretierbar ist.

## Claims

1. A fitting apparatus for fitting a motor vehicle tyre on a wheel rim (9) comprising a rotatable rim mounting means (2) on which the wheel rim (9) is fixed, a fitting tool in the form of a fitting roller (14) which is pressed against a tyre bead and whose axis is inclined with respect to the axis of the rim mounting means (2), a rotary drive (6) for driving the fitting roller (14) for fitting the motor vehicle tyre (25) when the wheel rim (9) is rotating and the motor vehicle tyre which is clamped fast at least at one point to the wheel rim (9) is also rotating therewith, and a brake means (11) which is associated with the rim mounting means (2) characterized in that the axis of the fitting roller (14) is inclined in the direction of the rolling-in movement for more strongly pushing the tyre bead into the well base portion of the rim (9).

2. A fitting apparatus according to claim 1 characterized in that the tyre bead is clamped fast in the well base portion of the rim (9).

3. A fitting apparatus according to claim 2 characterized in that the upper and lower beads of the tyre (25) are clamped fast in the well base portion of the rim (9).

4. A fitting apparatus according to claim 1 characterized in that the fitting roller (14) is in the form of conical roller.

5. A fitting apparatus according to claim 1 characterized in that the brake means (11) is arranged at the lower end of the rotatable rim mounting means (2).

6. A fitting apparatus according to claim 1 or claim 4 characterized in that the fitting roller (14) is pressed with a substantially constant pressure horizontally in the direction of the rim core portion (17).

7. A fitting apparatus according to claim 1 characterized in that a fitting unit (5) comprising the rotary drive (6) and the fitting roller (14) is movable vertically.

8. A fitting apparatus according to one of claims 1 to 7 characterized in that the weight of the displaceable fitting unit (5) is compensated by cylinder unit (21) which is acted upon with a constant pressure.

9. A fitting apparatus according to claim 1 or claim 2 characterized in that the tyre bead is pressed radially outwardly into the well base portion of the rim (9) for clamping the tyre bead fast.

10. A fitting apparatus according to one of claims 1 to 9 characterized in that the fitting unit (5) can be locked in the horizontal direction.

**Revendications**

1. Dispositif pour le montage d'un pneumatique de véhicule sur une jante de roue (9), avec un système de fixation de jante (2) tournant sur lequel est fixée la jante de roue (9), un outil de montage sous la forme d'un rouleau de montage (14) appliqué contre un talon de pneu et dont l'axe est orienté en oblique par rapport à l'axe du système de fixation de jante (2), un mécanisme d'entraînement en rotation (6) pour l'entraînement du rouleau de montage (14) pour le montage du pneumatique de véhicule (25) avec rotation de la jante de roue (9) et du pneumatique de véhicule bloqué au moins en un endroit sur la jante de roue (9), et un dispositif de freinage (11) associé au système de fixation de jante (2), caractérisé en ce que l'axe du rouleau de montage (14) est incliné dans la direction du mouvement d'enroulement pour pousser le talon de pneu plus profondément dans la base creuse de la jante (9).

2. Dispositif de montage selon la revendication 1, caractérisé en ce que le talon de pneu est bloqué dans la base creuse de la jante (9).

3. Dispositif de montage selon la revendication 2, caractérisé en ce que les talons de pneu supérieur et inférieur du pneu (25) sont bloqués dans la base creuse de la jante (9).

4. Dispositif de montage selon la revendication 1, caractérisé en ce que le rouleau de montage (14) est conformé en rouleau conique.

5. Dispositif de montage selon la revendication 1, caractérisé en ce que le dispositif de freinage (11) est disposé à l'extrémité inférieure du système de fixation de jante (2) tournant.

6. Dispositif de montage selon l'une des revendications 1 ou 4, caractérisé en ce que le rouleau de montage (14) est poussé horizontalement, avec une pression approximativement constante, en direction du noyau de jante (17).

7. Dispositif de montage selon la revendication 1, caractérisé en ce qu'une unité de montage (5) munie du mécanisme d'entraînement en rotation (6) et du rouleau de montage (14) peut être déplacée dans le sens vertical.

8. Dispositif de montage selon l'une quelconque des revendications 1 à 7, caractérisé en ce que le poids de l'unité de montage (5) mobile est compensé par une unité de cylindre (21) mise sous une pression constante.

9. Dispositif de montage selon l'une des revendications 1 ou 2, caractérisé en ce que, pour le blocage du talon de pneu, celui-ci est poussé radialement vers l'extérieur dans la base creuse de la jante (9).

10. Dispositif de montage selon l'une quelconque des revendications 1 à 9, caractérisé en ce que l'unité de montage (5) peut être arrêtée dans le sens horizontal.